# EUROPÄISCHE PATENTANMELDUNG

(11) **EP 1 939 592 A1**
(43) Veröffentlichungstag der Anmeldung: **02.07.2008**
(21) Anmeldenummer: 07121755.8
(22) Anmeldetag: 28.11.2007
(51) Int. Cl.: G01D 5/14

(54) **Vorrichtung zur Detektion der absoluten Winkellage einer Drehachse**

(30) Priorität: 28.12.2006 DE 102006061701
(71) Anmelder: ROBERT BOSCH GMBH, 70442 Stuttgart (DE)
(72) Erfinder: Kimmich, Peter, 71101, Schoeneich (DE); Kuehn, Timo, 76307, Karlsbad (DE)

(57) **Zusammenfassung**

Die Erfindung betrifft einen Lagedetektor zur Detektion der absoluten Winkellage einer Drehachse mit einem Permanentmagneten (5; 38) und mit einem Magnetfeldsensor (10; 39) zum Erzeugen eines Messsignals abhängig von der Stärke eines einen Messbereich durchdringenden Magnetfeldes. Es ist weiter ein Schraubengetriebe (2, 3, 4; 33, 34) vorgesehen, das mit der Drehachse (1; 31) gekoppelt ist, um den Permanentmagneten (5; 38) abhängig von der absoluten Winkellage in Richtung der Drehachse (1; 31) zu verschieben, wobei der Magnetfeldsensor (10) so bezüglich der Drehachse (1) angeordnet ist, dass ein Abstand zwischen dem Magnetfeldsensor (10; 39) und dem Permanentmagneten (5) abhängig von der absoluten Winkellage der Drehachse (1; 31) variiert, so dass die Stärke des durch den Permanentmagneten (5; 38) hervorgerufenen Magnetfeldes variiert.

## Beschreibung

Die Erfindung betrifft eine Vorrichtung zur Detektion der absoluten Lage einer Drehachse, insbesondere einer Rotorachse.

Bislang ermöglichen einfache Sensoren zur Erkennung der Rotorlage z. B. eines Elektromotors eine Erkennung der absoluten Winkellage über einen Bereich von maximal 360°. Absolute Rotorlagen über einen größeren Bereich können bislang nur durch Detektieren der Übergänge zwischen 360° zu 0° bzw. umgekehrt mit Hilfe einer Verarbeitungslogik detektiert und als z.B. Umdrehungszahl zusätzlich zur Winkellage bereitgestellt werden. Dies erfordert jedoch, dass zu allen Zeitpunkten, zu denen eine Drehung der Drehachse auftreten kann, die Verarbeitungslogik funktionsbereit ist, damit die eventuell auftretenden Übergänge der Winkellage erkannt werden können.

Anstelle einer solchen Verarbeitungslogik lässt sich auch eine Zahnradmimik vorsehen, die mit der Drehachse gekoppelt ist, und bei der zwei weitere Zahnräder mit unterschiedlichen Zahnzahlen über ein Ritzel mit der Drehachse gekoppelt sind. Die Winkellagen der Zahnräder werden einzeln bestimmt und daraus mit Hilfe des "Noniusprinzips" die absolute Winkellage bestimmt. Eine solche Zahnradmimik erfordert üblicherweise einen zusätzlichen Raum seitlich der Drehachse und ist aufgrund der mechanischen Bauelemente fehleranfällig.

Bislang kann die absolute Winkellage einer Drehachse beispielsweise mit Hilfe eines geeigneten Magnetfeldsensor detektiert werden, der die Stärke eines von einem auf der Drehachse angeordneten Permanentmagneten abgegebenen Magnetfeldes bezüglich zwei Richtungskomponenten detektiert. Aus den ermittelten Messgrößen, die die entsprechenden Magnetfeldstärken bezüglich der jeweiligen Richtungskomponente angeben, kann die absolute Winkellage der Drehachse ermittelt. Diese Lagesensoren sind beispielsweise mit zwei Hall-Magnetfeldsensoren ausgebildet. Die Hall-Magnetfeldsensoren sind so angeordnet, dass sie ein Magnetfeld bezüglich zwei zueinander um 90° versetzten Richtungskomponenten detektieren. Der Magnetfeldsensor wird so angeordnet, dass bei einer gleichförmigen Drehung des Permanentmagneten auf der Drehachse sich in den Hall-Sensoren des Magnetfeldsensors jeweils ein sinusförmiger Verlauf des Messsignals bezüglich der Winkellage der Drehachse ergibt. Die Periodenlänge des sinusförmigen Verlaufs des Messsignals beträgt genau eine Umdrehung, so dass mit einem solchen Sensor lediglich eine absolute Lageerkennung für eine Umdrehung der Drehachse möglich ist.

Es ist Aufgabe der vorliegenden Erfindung, eine Vorrichtung zur Detektion der absoluten Lage einer Drehachse zur Verfügung zu stellen, die es ermöglicht, ohne eine permanente Auswertung von Änderungen der Winkellage, z. B. mit Hilfe einer Verarbeitungslogik, die absolute Winkellage einer Drehachse auch über einen größeren Bereich als 360° zu detektieren.

Diese Aufgabe wird durch die Vorrichtung nach Anspruch 1 sowie durch das Messsystem nach Anspruch 9 gelöst.

Weitere vorteilhafte Ausgestaltungen der Erfindung sind in den abhängigen Ansprüchen angegeben.

Gemäß einer Ausführungsform ist eine Vorrichtung zur Detektion der absoluten Winkellage einer Drehachse mit einem Permanentmagneten und mit einem Magnetfeldsensor zum Erzeugen eines Messsignals abhängig von der Stärke eines einen Messbereich durchdringenden Magnetfeldes vorgesehen. Mit Hilfe einer Kopplungseinheit, die mit der Drehachse gekoppelt ist und die insbesondere als Schraubengetriebe ausgeführt ist, ist der Permanentmagnet abhängig von der absoluten Winkellage in Richtung der Drehachse verschiebbar, wobei der Magnetfeldsensor so bezüglich der Drehachse angeordnet ist, dass ein Abstand zwischen dem Magnetfeldsensor und dem Permanentmagneten abhängig von der absoluten Winkellage der Drehachse variiert, so dass die Stärke des durch den Permanentmagneten hervorgerufenen Magnetfeldes variiert.

Eine solche Vorrichtung hat den Vorteil, dass durch die Kopplungseinheit die Position des Permanentmagneten entlang der Drehachse verschoben werden kann. Dabei ist die Position des Permanentmagneten abhängig von der Länge des Schraubengetriebes über einen größeren Winkelbereich als 360° eindeutig einer axialen Position des Permanentmagneten zuordenbar ist. Die axiale Position des Permanentmagneten bestimmt seine Entfernung vom Magnetfeldsensor, so dass am Magnetfeldsensor die Stärke des Magnetfeldes abhängig von der Entfernung zwischen Permanentmagneten und Magnetfeldsensor variiert. Das dort gemessene Messsignal steht damit in direkter Beziehung zu der absoluten Winkellage der Drehachse.

Vorzugsweise ist der Permanentmagnet mit einer Fixiereinrichtung nicht rotierbar auf einem Schlitten der als Schraubengetriebe ausgebildeten Kopplungseinheit angeordnet und der Magnetfeldsensor so ausgerichtet, um bei sich verändernden Abstand zu dem Permanentmagneten eine entsprechende Änderung der Stärke des Magnetfelds zu detektieren.

Weiterhin kann der Permanentmagnet einen Magnetpol aufweisen, an dem eine Komponente des abgegebenen Magnetfeldes in radialer Richtung zur Drehachse verläuft und der Magnetfeldsensor so angeordnet ist, dass eine Komponente des den Messbereich durchdringenden Magnetfeldes in radialer Richtung bezüglich der Drehachse verläuft.

Gemäß einer weiteren Ausführungsform ist ein weiterer Permanentmagnet mit der Drehachse fest verbunden ist, um ein weiteres Magnetfeld zu erzeugen, das sich dem Magnetfeld des Permanentmagneten überlagert, wobei der Magnetfeldsensor so ausgebildet ist, um weiterhin ein von der Winkellage der Drehachse abhängiges Messsignal zu erzeugen.

Vorzugsweise ist die Drehachse mit einem Steigungsgewinde versehen, in das ein Vorsprung des Schlittens eingreift, so dass bei Drehen der Drehachse der Vorsprung in Richtung der Drehachse bewegbar ist.

Gemäß einer weiteren bevorzugten Ausführungsform ist der Permanentmagnet rotierbar auf einem Drehschlitten der als Schraubengetriebe ausgebildeten Kopplungseinheit angeordnet, so dass bei Drehen der Drehachse der Permanentmagnet mit der Drehachse rotiert, wobei der Magnetfeldsensor so angeordnet ist, um das Messsignal sowohl abhängig von der axialen Verschiebung des Permanentmagneten als auch von der radialen Winkellage des Permanentmagneten zu erzeugen.

Weiterhin kann der Drehschlitten mit der Drehachse eine gemeinsame Rotationsachse aufweisen und mit der Drehachse gekoppelt sein, so dass die Drehung der Drehachse auf den Drehschlitten übertragen wird, wobei der Drehschlitten in axialer Richtung von der Drehachse entkoppelt ist.

Gemäß einem weiteren Aspekt ist ein Messsystem zum Detektieren der absoluten Winkellage einer Drehachse mit einem Lagedetektor und mit einer Auswerteinheit vorgesehen, die das Messsignal bzw. die Messsignale empfängt und diesem/diesen einen absolute Winkellage zuordnet. Die Auswerteeinheit des Messsystems kann eine Zuordnungseinrichtung aufweisen, um das Messsignal bzw. die Messsignale einer absoluten Winkellage zuzuordnen.

Bevorzugte Ausführungsformen der Erfindung werden nachfolgend anhand der beigefügten Zeichnungen näher erläutert. Es zeigen:
Figur 1 eine Schnittsansicht eines Lagedetektors gemäß einer ersten Ausführungsform der Erfindung;
Figur 2 eine Schnittansicht in Achsrichtung entlang der Schnittlinie A - A durch den Lagedetektor der Figur 1;
Figur 3 einen Signalverlauf von Messsignalen des Magnetfeldsensors der Fig. 1 abhängig von der Winkellage des Rotors;
Figur 4 eine Schnittansicht durch einen Lagedetektor gemäß einer weiteren Ausführungsform der Erfindung;
Figur 5 zeigt den Verlauf der Messsignale des Magnetfeldsensors für verschiedene Winkellagen der Drehachse bei dem Lagedetektor der Fig. 4.

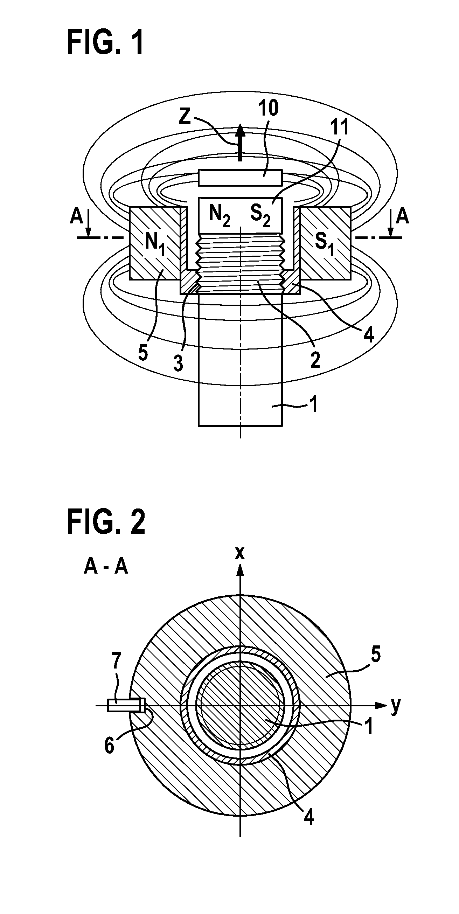

Figur 1 zeigt eine Querschnittsansicht eines Lagedetektors gemäß einer ersten Ausführungsform der Erfindung. Der Lagedetektor ist am Ende einer drehbaren Rotorachse 1 vorgesehen. Das Ende der Rotorachse 1 ist mit einem Steigungsgewinde 2 versehen, das beispielsweise in die Rotorachse 1 eingeschnitten ist. Das Steigungsgewinde 2 ist mit einem Gewindegegenstück 3 gekoppelt, das sich an einem von der Rotorachse 1 getrennten Schlitten 4 befindet. Eine Drehung der Rotorachse 1 bewirkt somit eine Verschiebung des Schlittens 4 in axialer Richtung Z. Das Gewindegegenstück 3 kann als Gegengewinde, als einfacher Vorsprung oder als Stift ausgebildet sein, die in das Steigungsgewinde 2 eingreifen, ohne eine Drehbewegung der Rotorachse 1 zu behindern.

Auf dem Schlitten 4 ist ein erster Permanentmagnet 5 angebracht, der die Magnetpole N1 und S1 aufweist. Die Magnetpole N1, S1 sind so ausgerichtet, dass sie ein Magnetfeld erzeugen, das direkt an den Magnetpolen in radialer Richtung bezüglich der Rotorachse verläuft. Vorzugsweise ist der erste Permanentmagnet 5 als ringförmiger Magnet um den Schlitten 4 ausgebildet. In einer bevorzugten Ausführungsform ist der Schlitten 4 als eine Hülse mit einem entsprechenden Gegengewinde 3 zu dem Steigungsgewinde 2 ausgebildet, die auf dem Steigungsgewinde 2 aufgeschraubt ist. Der ringförmige Permanentmagnet 5 ist mit einer Innenbohrung zur Aufnahme der Hülse vorgesehen.

Eine Draufsicht auf die Hülse und den ersten Permanentmagneten 5 ist in Figur 2 dargestellt. Damit eine Drehbewegung der Rotorachse 1 den Schlitten 4 mit dem Permanentmagneten 5 in axialer Richtung bewegt, muss die Anordnung aus Schlitten 4 und erstem Permanentmagneten 5 gegen eine Drehbewegung bei einer Drehung der Rotorachse 1 gehalten werden. Dies kann beispielsweise durch eine Nut 6 in dem ersten Permanentmagneten 5 entlang einer axialen Richtung der Rotorachse 1 sowie einem entsprechenden feststehenden Halteelement 7 erreicht werden, das in die Nut 6 eingreift und darin entlang der axialen Richtung verschieblich ist. Dadurch kann verhindert werden, dass die Anordnung aus Schlitten 4 und Permanentmagneten 5 bei einer Drehung der Rotorachse 1 mitgenommen wird.

An dem Ende der Rotorachse 1 ist in einem vorgegebenen Abstand ein Magnetfeldsensor 10 angeordnet. Der Magnetfeldsensor 10 dient dazu, das von dem ersten Permanentmagneten 5 hervorgerufene Magnetfeld zu detektieren. Durch die Verschiebung des ersten Permanentmagneten 5 entlang der axialen Richtung Z bei einer Drehbewegung der Rotorachse 1 verändert sich der Abstand des ersten Permanentmagneten 5 zum Magnetfeldsensor 10 abhängig von der momentanen Winkellage des Rotors 1. Da das Steigungsgewinde 2 mit mehr als einer Windung versehen ist, ist es somit mit einer solchen Anordnung möglich, die Winkellage des Rotors 1 auch für Winkellagen von mehr als 360° zu diskriminieren.

Da insbesondere bei größeren Abständen zwischen Permanentmagnet 5 und Magnetfeldsensor 10 eine Empfindlichkeit des Messsystems (bzw. dessen Auflösung) erheblich auf Grund des exponentiellen Abfalls der Stärke des zu detektierenden Magnetfelds an dem Magnetfeldsensor 10 reduziert ist, können kleinere Änderungen der Winkellage nicht mehr detektiert werden. Daher ist vorzugsweise ein zweiter Permanentmagnet 11 am Ende des Rotors 1 vorgesehen, der die Magnetpole N2 und S2 aufweist. Die Magnetpole N2 und S2 bewirken ebenfalls ein Magnetfeld in radialer Richtung bezüglich der Rotorachse 1, das sich dem Magnetfeld des ersten Permanentmagneten 5 überlagert. Eine Drehung der Rotorachse 1 führt dann zusätzlich auch zu einer Komponente des resultierenden Magnetfeldes, dessen Richtung abhängig von der Winkellage der Rotorachse 1 in einer Ebene senkrecht zur axialen Richtung variiert. Der Magnetfeldsensor 10 ist so ausgerichtet, dass er die Stärke des Magnetfeldes in dieser Ebene, d. h. in der Ebene senkrecht zur axialen Richtung des Rotors 1, detektieren kann.

Weiterhin weist der Magnetfeldsensor 10 vorzugsweise zwei versetzt zueinander angeordnete Hall-Sensoren auf, die zur Detektion von zwei verschiedenen Richtungskomponenten des Magnetfelds in der radialen Ebene bezüglich der axialen Richtung Z ausgebildet ist. Vorzugsweise sind die Hall-Sensoren zueinander so angeordnet, dass sie Richtungskomponenten des Magnetfeldes detektieren, die um 90° zueinander versetzt sind. Der Magnetfeldsensor 10 kann somit zwei Messsignale erfassen, die jeweils eine Überlagerung der Magnetfelder des ersten und des zweiten Permanentmagneten 5, 11 darstellen, wobei der durch den zweiten Permanentmagneten 11 bewirkte Anteil des Magnetfeldes für die Detektion der absoluten Winkellage der Rotorachse 1 für Winkellagen zwischen 0 und 360° vorgesehen ist. Die Richtungskomponenten des durch den ersten Permanentmagneten 5 hervorgerufenen Magnetfeldes ändern sich auf Grund der Fixierung des Permanentmagneten 5 durch das Halteelement 7 und der Nut 6 nicht, und somit variiert der diesbezügliche Anteil des Magnetfeldes für beide Richtungskomponenten in gleichem Maße abhängig von dem Abstand zum Magnetfeldsensor 10.

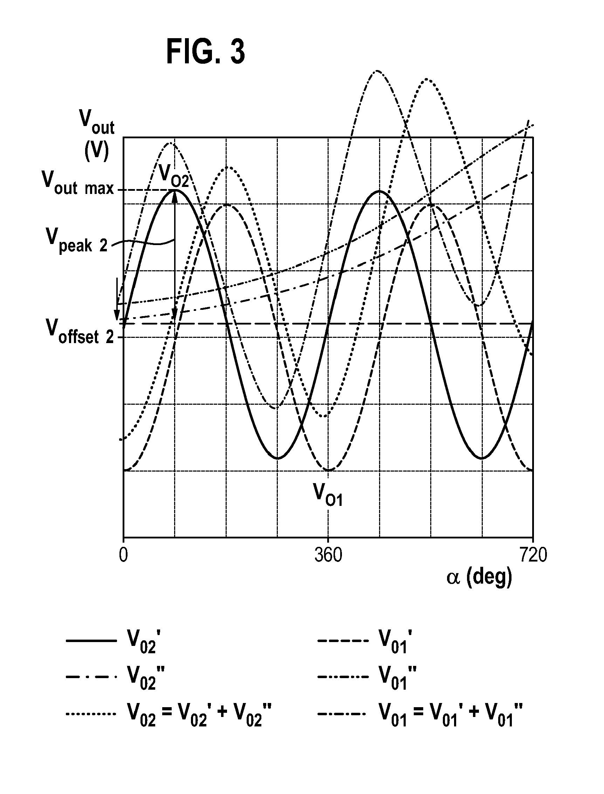

Der Verlauf der dadurch bewirkten Messsignale ist in dem Diagramm der Figur 3 dargestellt. Dort sind die Verläufe der Messsignale der zwei Hall-Sensoren bezüglich der Magnetfelder des ersten und des zweiten Permanentmagneten 5, 11 sowie die resultierenden Messsignale dargestellt. Man erkennt, dass die Teilmessgrößen (Messspannungen) V01' und V02', die durch das Magnetfeld des zweiten Permanentmagneten 11 hervorgerufen werden, im Wesentlichen sinusförmige Verläufe über die Winkellage der Rotorachse 1 haben, die zueinander entsprechend der versetzten Anordnung der Hall-Sensoren eine Phasenverschiebung von 90° aufweisen. Anhand der Werte der jeweiligen Messspannungen lässt sich dadurch die absolute Winkellage der Rotorachse 1 in einem Bereich von 0 - 360° eindeutig bestimmen. Zusätzlich detektieren die Hall-Sensoren des Magnetfeldsensors 10 das durch den ersten Permanentmagneten 5 hervorgerufene Magnetfeld in Form der Teilmessgrößen V01" und V02". Die Verläufe dieser Teilmessgrößen sind als (exponentiell) ansteigende Kennlinien über der Winkellage aufgetragen. Als resultierende Messgrößen ergeben sich V01 und V02, die eine Überlagerung der Teilmessgrößen mit den sinusförmigen Verläufen und den ansteigenden Verläufen darstellen. Dies führt zu einem oszillierenden Verlauf der Messgrößen in den Hall-Sensoren mit einer abhängig von der absoluten Winkellage ansteigenden Amplitude, so dass sich ein Wertepaar der Messgrößen auch über einen Winkellagebereich von 360° hinaus eindeutig einer absoluten Winkellage der Rotorachse 1 zuordnen lässt.

Die Empfindlichkeit des Magnetfeldsensors 10 bzw. die Stärke der Permanentmagneten sollte so gewählt werden, dass das resultierende Magnetfeld der beiden Permanentmagnete 5, 11 über einen großen Winkellagenbereich innerhalb des Messbereichs des Magnetfeldsensors liegt.

Bei Verwendung eines solchen Lagedetektors in einem Messsystem kann die Auswertung beispielsweise mit Hilfe einer Lookup-Tabelle erfolgen, die zuvor z. B. in einem Kalibrierverfahren erstellt worden ist, bei dem der Lagedetektor über den gesamten Messbereich verfahren worden ist und die entsprechenden Messgrößen in Zuordnung zu einer Winkellage aufgezeichnet worden sind. Damit können die aus den Hall-Sensoren des Magnetfeldsensors 10 ermittelten Messgrößen unmittelbar einer Winkellage des Rotors zugeordnet werden.

Um die Empfindlichkeit des Lagedetektors bei großen Abständen zwischen erstem Permanentmagneten 5 und Magnetfeldsensor 10 zu erhöhen, kann das Steigungsgewinde 2 mit sich verändernder Steigung ausgebildet sein, so dass beispielsweise eine Verschiebung relativ zu einer Änderung der Winkellage umso größer ist, je weiter der Schlitten 4 von dem Magnetfeldsensor entfernt ist. So lässt sich die abnehmende Genauigkeit aufgrund der mit der Entfernung exponentiell abnehmende Stärke des Magnetfeldes bzw. abnehmenden Änderung der Magnetfeldstärke pro Längeneinheit zumindest teilweise gegenkompensieren.

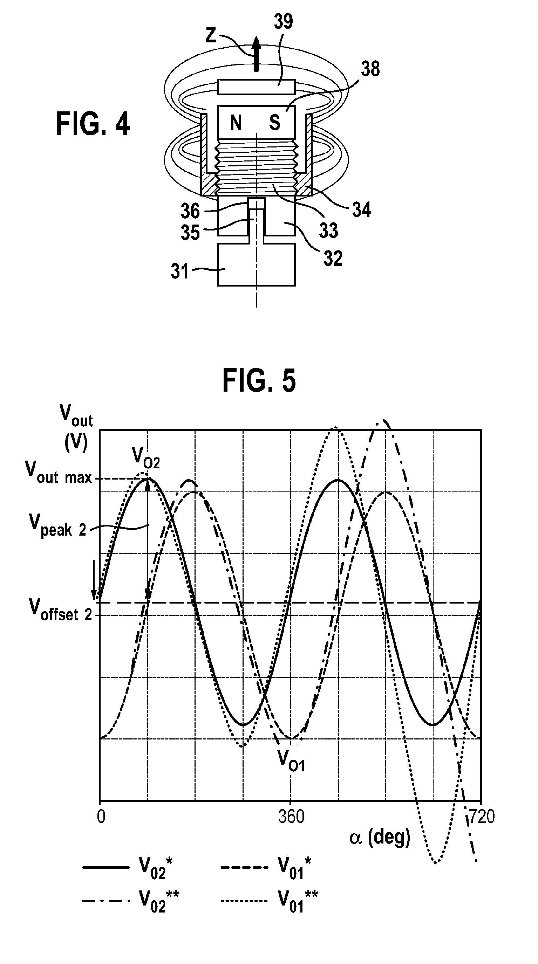

In Figur 4 ist eine Schnittansicht einer weiteren Ausführungsform eines Lagedetektors dargestellt. Der Lagedetektor ist an einem Ende einer Rotorachse 31 angeordnet. Der Lagesensor weist einen Drehschlitten 32 auf, der ein Steigungsgewinde 33 umfasst. Ein Gewindegegenstück 34, z. B. in Form einer Hülse, ist in axialer Richtung des Rotors 31 ausgerichtet und gegenüber um die axiale Richtung erfolgenden Drehungen fixiert. An einem dem Rotor 31 gegenüberliegenden Ende des Drehschlittens 32 ist ein Permanentmagnet 38 angeordnet, der an seinen Magnetpolen N, S ein Magnetfeld in radialer Richtung bezüglich der Rotorachse 31 bewirkt. Die Rotorachse 31 und der Drehschlitten 32 sind so miteinander gekoppelt, dass der Rotor 31 bezüglich einer Drehung den Drehschlitten 32 mitnimmt, jedoch eine Verschiebung des Drehschlittens 32 in axialer Richtung Z als Freiheitsgrad zulässt. Dies wird bei der vorliegenden Ausführungsform durch einen Zapfen 35 realisiert, der mit zwei Flächen in einer Nut 36 mit Spiel geführt ist. Dadurch wird der Drehschlitten 32 von einer Drehung des Rotors 31 mitgenommen und abhängig von dem Drehwinkel in axialer Richtung Z bezüglich der Rotorachse 31 verschoben. Dadurch dreht sich der Permanentmagnet 38 auf dem Drehschlitten 32 gemeinsam mit der Rotorachse 31 und wird zusätzlich in axialer Richtung Z abhängig von der Winkellage verschoben.

Wie bei der ersten Ausführungsform ist ein Magnetfeldsensor 39 ist vorgesehen, der zwei Hall-Magneten umfasst, die zwei Richtungskomponenten eines Magnetfelds in einer Ebene senkrecht zur axialen Richtung Z erfassen können. Der Magnetfeldsensor 39 ist mit einem Abstand von dem mit dem Permanentmagneten 38 versehen Ende des Drehschlittens 32 angeordnet. Die Drehung des Permanentmagneten 38 bei einer Drehung der Rotorachse 31 bewirkt die Veränderung der Messgrößen bezüglich der Richtungskomponenten des Magnetfelds abhängig von der Winkellage im Bereich zwischen 0 und 360°, so dass über das Wertepaar der Messgrößen bezüglich der verschiedenen Richtungskomponenten die Lage zwischen 0 und 360° erfasst werden kann. Da der Abstand zwischen dem Magnetfeldsensor 39 und dem Permanentmagneten 38 weiterhin von der Winkellage des Rotors auch über den Bereich von 360° hinaus variiert, wird der Abstand zwischen Magnetfeldsensor 39 und Permanentmagneten 38 variiert. Dadurch variiert die Stärke des an dem Magnetfeldsensor 39 zu detektierenden Magnetfeldes abhängig von der Position des Permanentmagneten 38 in axialer Richtung. Dadurch wird ein Messsignal bewirkt, das über eine vollständige Umdrehung der Rotorachse 31 periodisch ist, jedoch bei gleich bleibender Drehrichtung eine stetig ansteigende Amplitude der Messsignale bewirkt. Dies ist in dem Diagramm der Figur 5 dargestellt. Während die Messgrößen V01* und V02* das Messsignal der Hall-Sensoren bei gleich bleibendem Abstand zwischen Permanentmagnet und Magnetfeldsensor angeben, zeigen die Messsignale V01** und V02** die in dem Magnetfeldsensor 39 bei der in Figur 4 gezeigten Ausführungsform hervorgerufenen Messsignale. Die beiden Messsignale lassen sich auf diese Weise eindeutig einer absoluten Winkellage aus einem Bereich größer als 360° zuordnen.

## Patentansprüche

1. Vorrichtung zur Detektion der absoluten Winkellage einer Drehachse (1; 31),
mit einem Permanentmagneten (5; 38);
mit einem Magnetfeldsensor (10; 39) zum Erzeugen eines Messsignals abhängig von der Stärke eines einen Messbereich durchdringenden Magnetfeldes;
**gekennzeichnet durch**:
eine Kopplungseinheit (2, 3, 4; 33, 34), die mit der Drehachse (1; 31) gekoppelt ist, um den Permanentmagneten (5; 38) abhängig von der absoluten Winkellage in Richtung der Drehachse (1; 31) zu verschieben,
wobei der Magnetfeldsensor (10; 39) so bezüglich der Drehachse (1; 31) angeordnet ist, dass ein Abstand zwischen dem Magnetfeldsensor (10; 39) und dem Permanentmagneten (5; 38) abhängig von der absoluten Winkellage der Drehachse (1; 31) variiert, so dass die Stärke des **durch** den Permanentmagneten (5; 38) hervorgerufenen Magnetfeldes variiert.

2. Vorrichtung nach Anspruch 1, **dadurch gekennzeichnet, dass** die Kopplungseinheit als Schraubengetriebe ausgebildet ist, dass der Permanentmagnet (5) mit Hilfe einer Fixiereinrichtung (6, 7) nicht rotierbar auf einem Schlitten (4) des Schraubengetriebes (2, 3, 4) angeordnet ist und dass der Magnetfeldsensor (10) so ausgerichtet ist, um bei sich verändernden Abstand zu dem Permanentmagneten eine entsprechende Änderung der Stärke des Magnetfelds zu detektieren.

3. Vorrichtung nach Anspruch 2, **dadurch gekennzeichnet, dass** der Permanentmagnet (5) einen Magnetpol aufweist, an dem eine Komponente des abgegebenen Magnetfeldes in radialer Richtung zur Drehachse (1) verläuft und der Magnetfeldsensor (10) so angeordnet ist, dass eine Komponente des den Messbereich durchdringenden Magnetfeldes in radialer Richtung bezüglich der Drehachse (1) verläuft.

4. Vorrichtung nach einem der Ansprüche 2 und 3, **dadurch gekennzeichnet, dass** ein weiterer Permanentmagnet (11) mit der Drehachse (1) fest verbunden ist, um ein weiteres Magnetfeld zu erzeugen, das sich dem Magnetfeld des Permanentmagneten (5) überlagert, wobei der Magnetfeldsensor so ausgebildet ist, um weiterhin ein von der Winkellage der Drehachse (1) abhängiges Messsignal zu erzeugen.

5. Vorrichtung nach einem der Ansprüche 1 bis 4, **dadurch gekennzeichnet, dass** die Drehachse (1) mit einem Steigungsgewinde (2) versehen ist, in das ein Vorsprung (3) des Schlittens (4) eingreift, so dass bei Drehen der Drehachse (1) der Vorsprung in Richtung der Drehachse (1) bewegbar ist.

6. Vorrichtung nach Anspruch 1, **dadurch gekennzeichnet, dass** der Permanentmagnet (38) rotierbar auf einem Drehschlitten (32) der als Schraubengetriebe ausgebildeten Kopplungseinheit (2, 3, 4; 33, 34) angeordnet ist, so dass bei Drehen der Drehachse (31) der Permanentmagnet (38) mit der Drehachse (31) rotiert, wobei der Magnetfeldsensor (39) so angeordnet ist, um das Messsignal sowohl abhängig von der axialen Verschiebung des Permanentmagneten (38) als auch von der radialen Winkellage des Permanentmagneten (39) zu erzeugen.

7. Vorrichtung nach Anspruch 6, **dadurch gekennzeichnet, dass** der Drehschlitten (32) mit der Drehachse (31) eine gemeinsame Rotationsachse aufweist und mit der Drehachse (31) gekoppelt ist, so dass die Drehung der Drehachse (31) auf den Drehschlitten (32) übertragen wird, wobei der Drehschlitten (32) in axialer Richtung von der Drehachse (31) entkoppelt ist.

8. Vorrichtung nach einem der Ansprüche 1 bis 7, **dadurch gekennzeichnet, dass** der Magnetfeldsensor (10, 39) zwei zueinander versetzte Magnetfeldsensoren umfasst, um Messsignale für zwei Komponenten des Magnetfeldes zu erfassen.

9. Messsystem zum Detektieren der absoluten Winkellage einer Drehachse (1,; 31) mit einer Vorrichtung nach einem der Ansprüche 1 bis 8 und mit einer Auswerteinheit, die das Messsignal bzw. die Messsignale empfängt und diesem/diesen einen absolute Winkellage zuordnet.

10. Messsystem nach Anspruch 9, wobei die Auswerteeinheit eine Zuordnungseinrichtung aufweist, um das Messsignal bzw. die Messsignale einer absoluten Winkellage zuzuordnen.
